# FASCICULE DE BREVET EUROPEEN

(11) **EP 0 960 045 B1**
(45) Date de publication et mention de la délivrance du brevet: **29.05.2002**
(21) Numéro de dépôt: 98908170.8
(22) Date de dépôt: 11.02.1998
(51) Int. Cl.: B62D 1/26

(54) **SYSTEME DE GUIDAGE LE LONG D'AU MOINS UN RAIL AU SOL POUR UN ESSIEU D'UN VEHICULE ROUTIER**
FÜHRUNGSSYSTEM ENTLANG MINDESTENS EINER BODENSCHIENE FÜR EINE ACHSE EINES STRASSENFAHRZEUGS
SYSTEM FOR GUIDING A ROAD VEHICLE AXLE ALONG AT LEAST ONE RAIL ON THE GROUND

(30) Priorité: 11.02.1997 FR 9701709
(43) Date de publication de la demande: 01.12.1999
(73) Titulaire: Lohr Industrie, 67980 Hangenbieten (FR)
(72) Inventeur: ANDRE, Jean-Luc, F-67210 Obernai (FR); KOERBER, Martin, F-67190 Mutzig (FR)
(74) Mandataire: Metz, Paul
(86) Numéro de dépôt international: FR9800264
(87) Numéro de publication internationale: WO9834827

(56) Documents cités:
- DE-B- 1 128 765
- FR-A- 2 708 245
- US-A- 1 602 066

## Description

L'invention se rapporte à un système de guidage pour véhicules routiers par galets assujettis au moins à un rail de guidage au sol.

La fonction de guidage des véhicules sur roues est assurée fréquemment par des roues additionnelles transversales aux roues principales. Ces roues additionnelles roulent sur des pistes latérales et reprennent les efforts latéraux dans les courbes. Les pneumatiques équipant les roues principales ne subissent aucun effort latéral ou tout au plus des efforts résiduels de faible amplitude.

C'est le cas par exemple des voitures de métro sur pneumatiques.

Or, chaque pneumatique peut accepter des efforts latéraux. Tous les pneumatiques équipant les véhicules routiers sont soumis dans les virages à des accélérations latérales conduisant à des déformations momentanées des flancs des pneumatiques. Ces efforts sont principalement repris par les pneumatiques.

Dans le cas des véhicules guidés par un ou plusieurs rail(s) au sol, lorsqu'il n'existe plus d'adhérence ou lors d'une déficience des pneus, ceux-ci ne pouvant plus jouer leur rôle de reprise des efforts latéraux, il apparaît un débattement latéral de l'essieu.

Selon l'invention, en vue de limiter les déports latéraux dus par exemple à la perte d'adhérence des pneumatiques, on autorise un léger débattement latéral jusqu'à une déviation angulaire déterminée entre l'essieu et un module limiteur-suiveur assujetti à suivre le même ou les mêmes rail(s) au sol.

Cette limitation permet de maintenir le débattement latéral à un niveau acceptable et d'éviter l'aggravation du comportement du véhicule.

La présente invention a pour but de gouverner directement l'essieu par un ensemble de guidage avant à deux bras identiques en prise de roulage sur un rail de guidage au sol. Elle a également pour but de limiter le débattement latéral de l'essieu à une valeur maximale en cas de perte d'adhérence des pneus.

L'ensemble de limitation n'est opérant qu'en cas de perte d'adhérence, ripage ou autre cause produisant les mêmes effets.

L'invention permet par les variantes de son ensemble directionnel d'utiliser comme rails de guidage ceux prévus pour un transport ferroviaire urbain en commun.

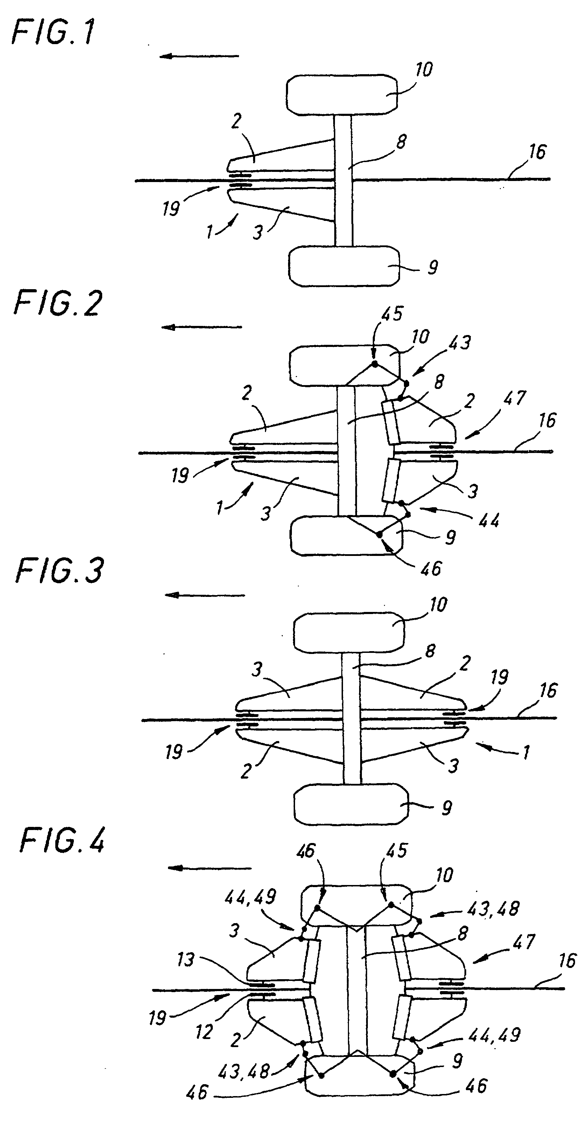

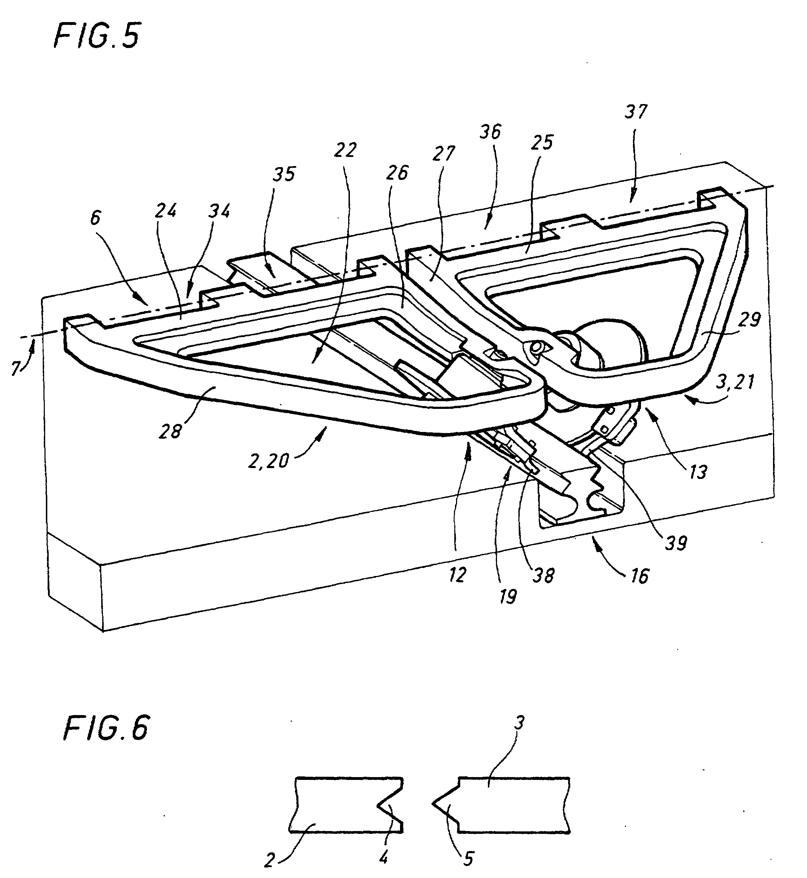

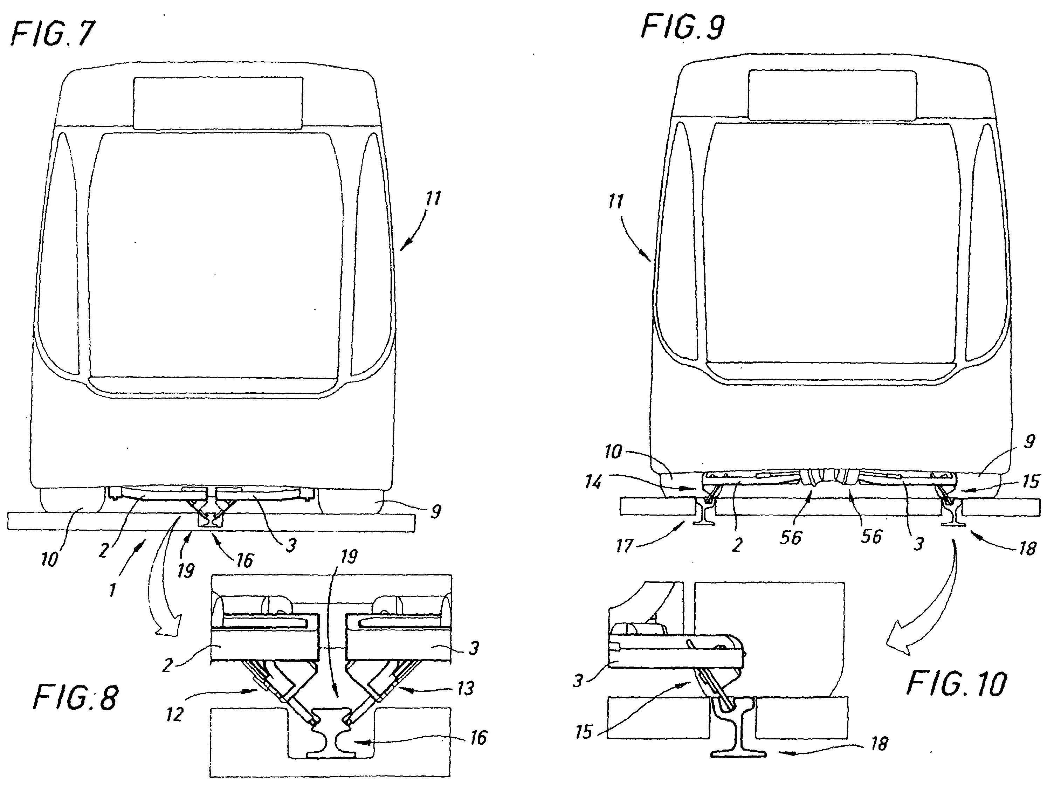

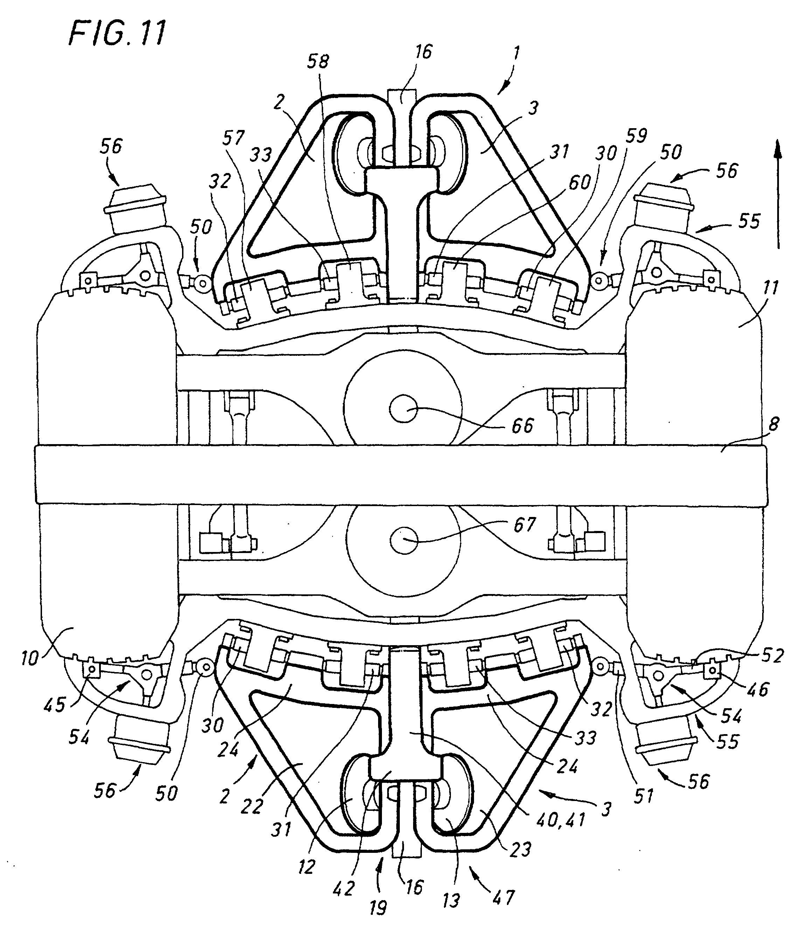

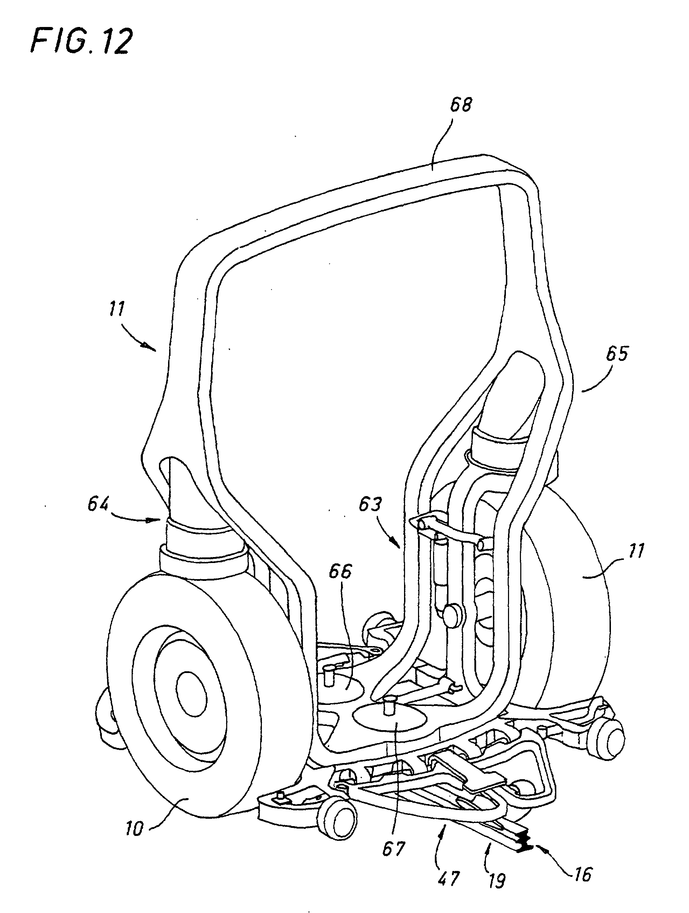

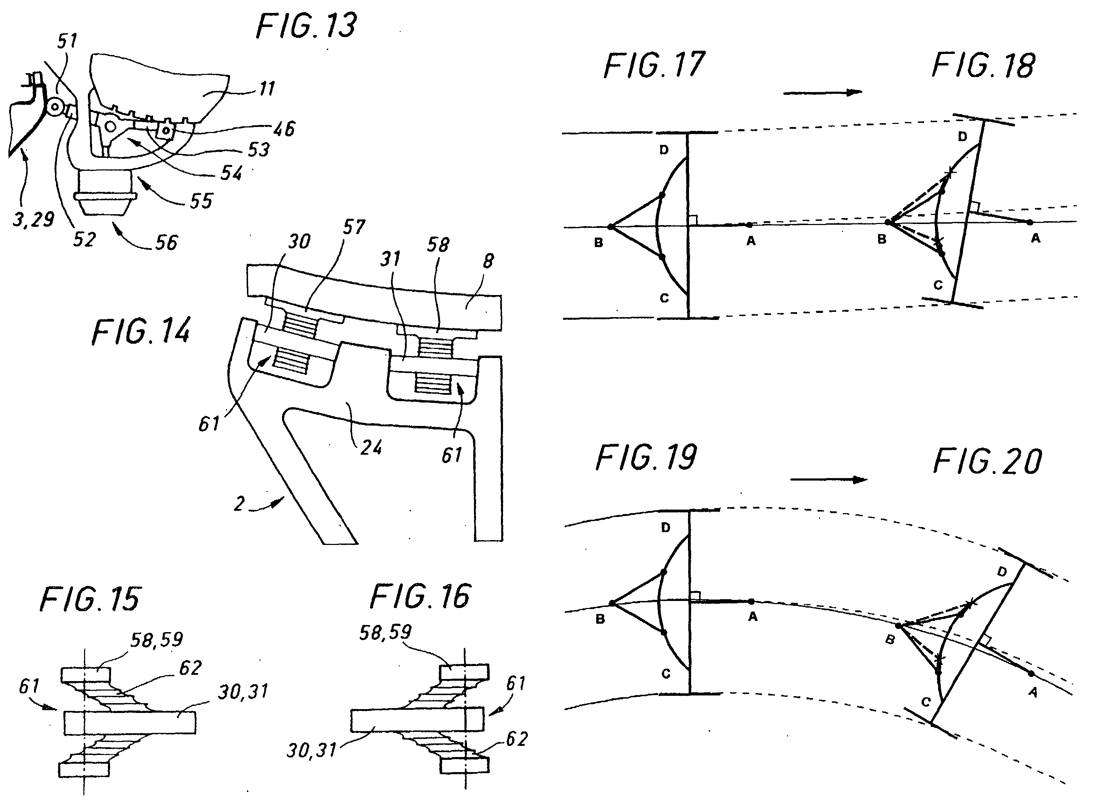

D'autres caractéristiques et avantages de l'invention apparaîtront dans la description qui suit, donnée à titre d'exemple et accompagnée des dessins qui représentent :
. la figure 1 est une vue schématique illustrant la réalisation de base selon l'invention ;
. la figure 2 est une vue schématique illustrant la réalisation avec limiteur de déport latéral ;
. la figure 3 est une vue schématique illustrant la réalisation réversible ;
. la figure 4 est une vue schématique illustrant la réalisation réversible avec limiteur de déport latéral ;
. la figure 5 est une vue en perspective de l'ensemble de guidage dans sa version simplifiée ;
. la figure 6 est une vue simplifiée en coupe montrant un exemple d'emboîtement transversal de jumelage des bras au niveau des deux côtés en regard ;
. la figure 7 est une vue en élévation d'un véhicule équipé de l'ensemble de guidage représenté sur la figure 5 ;
. la figure 8 est une vue de détail en élévation de l'ensemble de guidage ci-dessus ;
. la figure 9 est une vue en élévation d'un véhicule équipé de l'ensemble de guidage à deux galets de guidage distants montés dans une configuration où les galets roulent chacun sur le flanc d'un rail de tramway ;
. la figure 10 est une vue de détail en élévation de l'ensemble de guidage ci-dessus ;
. la figure 11 est une vue en plan de l'ensemble réversible de guidage avec limitation du débattement selon une réalisation technologique spécifique ;
. la figure 12 est une vue en perspective d'un module intermédiaire sans carrosserie montrant l'essieu et l'unité avant de l'ensemble réversible de guidage avec limitation du débattement ;
. la figure 13 est une vue schématique agrandie d'un exemple de dispositif d'immobilisation temporaire ;
. la figure 14 est une vue en plan de la zone d'articulation d'un bras de guidage par pivotement ;
. la figure 15 est une vue en plan d'un mode de réalisation de la liaison palière d'un bras de guidage en butée droite ;
. la figure 16 est une vue en plan d'un mode de réalisation de la liaison palière d'un bras de guidage en butée gauche ;
. les figures 17 et 18 sont des vues schématiques comparatives illustrant deux états de ligne droite sans puis avec débattement latéral dans le cas d'un débattement maximal admissible par le module suiveur-limiteur ;
. les figures 19 et 20 sont des vues schématiques comparatives illustrant deux états de virage sans puis avec débattement latéral dans le cas d'un débattement maximal admissible par le module suiveur-limiteur.

Lors de la survenue d'une perte d'adhérence des pneus, l'essieu s'éloigne de sa position correcte, ce qui représente un débattement latéral.

Selon l'invention, on cherche à limiter ce débattement latéral à une valeur maximale.

Conformément à la figure 1 , sur laquelle le sens de marche est indiqué par une flèche, le système de guidage selon l'invention se compose dans sa version de base d'un ensemble de guidage 1 formé de deux bras de guidage 2 et 3 identiques, juxtaposés, et jumelés par exemple par emboîtement de structures latérales complémentaires en regard du type gorge 4 et arête 5. Ces bras 2 et 3 sont articulés par une de leurs extrémités par une articulation de pivotement 6 autour d'un axe transversal 7 monté sur un essieu routier 8 d'un véhicule routier réunissant deux roues 9 et 10, par exemple d'un module intermédiaire 11 d'une rame routière de transport en commun. Cette articulation de pivotement 6 est destinée à absorber les mouvements de tangage.

Chaque bras 2 et 3 est pourvu à son autre extrémité d'un galet incliné de guidage 12,13 ou 14,15, chacun en prise de roulage sur une piste conformée dans un des flancs d'un rail central 16 ou de deux rails 17 et 18 de guidage au sol.

On distingue selon les variantes des galets inclinés proches 12,13 formant un couple central 19 (figures 7 et 8) et des galets inclinés 14,15 éloignés ou distants l'un de l'autre (figures 9 et 10).

Une des formes de réalisation des bras de guidage 2 et 3 de l'ensemble de guidage 1 est représentée sur la figure 5.

Cette forme de réalisation consiste en deux bras identiques de forme générale triangulaire dont le corps de chacun d'entre eux est constitué d'un élément mécanique périmétrique 20,21 conformé en triangle entourant un espace central libre 22,23.

Ce triangle sensiblement rectangle comprend une base transversale 24,25 située près de l'essieu ou bloc d'essieu 8, un côté intérieur 26,27 sensiblement perpendiculaire à la base et un côté oblique incurvé 28,29 reliant les deux premiers côtés.

Chaque bras est monté pivotant par la base 24,25 du son périmètre triangulaire 20,21 sur l'axe 7 transversal au véhicule. Les bras de guidage 2,3 sont rendus fonctionnellement solidaires en orientation de l'essieu routier ou bloc d'essieu 8 de manière à le gouverner directement.

En ce qui concerne l'articulation de pivotement 6, il peut s'agir d'un même axe de pivotement 7 pour les deux bras, de deux axes séparés physiquement ou d'une série de tronçons d'axes 30,31 et 32,33 disposés à la suite les uns des autres et portés respectivement par les bases 24,25 de chaque bras 2 et 3.

A cet effet, chaque base 24,25 présente du côté du bloc d'essieu 8 deux découpes en créneau 34,35 et 36,37 dont les extrémités des flancs portent les extrémités des tronçons d'axes.

Selon un mode d'exécution préféré, chaque côté intérieur 26,27 de chaque périmètre triangulaire qui est perpendiculaire à la base correspondante 24,25 porte à rotation libre au voisinage de son extrémité avant un galet incliné de guidage 12,13 ou 14,15 protégé par un déflecteur 38,39 faisant office de chasse-pierre.

Ces deux galets sont placés constructivement en regard. Lorsqu'ils sont proches, (galets 12,13), ils forment le couple central 19 dont les deux galets sont inclinés en V à pointe dirigée vers le bas en prise sur les pistes latérales de flanc du même rail central 16 de guidage au sol (figures 8 et 9).

Dans le cas de deux galets distants, (galets 14,15), l'inclinaison est inverse et les galets roulent sur les pistes de guidage conformées dans les deux flancs en regard des deux rails 17 et 18 distants l'un de l'autre. Cette application concerne notamment le cas de deux rails de tramway comme représenté sur les figures 9 et 10.

Comme déjà indiqué, les bras sont jumelés par exemple au niveau des galets par une force transversale de rappel élastique (non représentée). Pour le couple central 19 de galets proches, il s'agit d'une force de rappel en rapprochement. Pour les galets distants 14,15, il s'agit d'une force de rappel en écartement des bras.

De plus, les bras et par conséquent les galets, sont soumis à une contrainte verticale de charge destinée à assurer avec la force de rapprochement ou d'écartement des bras, l'appui roulant adapté de chaque galet sur sa piste directrice.

La contrainte verticale vers le bas est matérialisée par exemple par un sabot individuel ou commun 40 d'appui simultané sur les deux bras. Les galets sont ainsi maintenus constamment sur les pistes de guidage par la résultante des forces de rapprochement et d'appui afin d'éviter toute tendance au déraillement.

Il en est de même de façon adaptée pour l'ensemble de guidage à galets distants.

Dans la variante d'exécution représentée, le sabot d'appui est constitué d'une lame-ressort 41 à extrémité élargie 42 qui agit simultanément sur les deux bras 2,3 au voisinage du couple 19 de galets de guidage.

Dans tous les cas les deux bras de guidage sont solidarisés à l'essieu ou rendus solidaires de celui-ci de manière à l'orienter directement.

Selon la variante des figures 4, 11 et 12, l'ensemble de guidage est bloqué en direction par rapport à l'essieu par deux liaisons d'immobilisation sous la forme de deux dispositifs d'immobilisation latérale 43 et 44 montés articulés entre un des bras et un point fixe par rapport au bloc d'essieu, par exemple entre l'extrémité extérieure de chaque base 24,25 du périmètre triangulaire 20,21 et une pièce fixe 45,46 par rapport au bloc d'essieu placée au voisinage de la roue.

Un mode d'exécution de ces dispositifs d'immobilisation latérale est décrit ci-après.

Si l'on souhaite guider le véhicule dans les deux sens de marche avant et arrière, on peut envisager une réalisation présentant un ensemble de guidage identique 1 aussi bien à l'avant qu'à l'arrière, les deux ensembles ne fonctionnant pas forcément simultanément (figure 3).

Dans le cas de la réversibilité avec un suiveur-limiteur 47 de débattement latéral de l'essieu décrit plus loin, la liaison d'immobilisation latérale apportée par les deux dispositifs d'immobilisation 43,44 est temporaire. On utilise des dispositifs d'immobilisation à commande de changement d'état par exemple des dispositifs verrouillables 48,49. Ces dispositifs d'immobilisation se trouvent à l'état verrouillé à l'avant dans le sens de la marche matérialisé par une flèche sur les figures. On peut ainsi réaliser deux fonctions successivement, l'une de guidage à l'avant dans le sens de la marche et l'autre à l'arrière pour la limitation du débattement latéral de l'essieu avec un autre ensemble identique ou du même type qui se trouvera à l'arrière (figure 4).

L'une des extrémités des dispositifs d'immobilisation latérale commandée est réalisée télescopique avec ou sans effet amortisseur pour permettre le blocage de l'ensemble de guidage par rapport à l'essieu. Elle permet aussi grâce à son caractère télescopique d'absorber les sollicitations latérales dues aux mouvements de lacet.

Il peut s'agir d'une liaison mécanique à tête télescopique 50,51 dont une extrémité est articulée sur la pièce fixe 45, 46 par exemple solidaire de l'essieu et dont l'autre extrémité est montée articulée sur le flanc adjacent du bras de guidage. Chacune de ces liaisons peut être constituée d'un dispositif mécanique articulé par exemple à deux biellettes 52,53 articulées entre elles par une articulation intermédiaire 54 qui serait immobilisé sur commande par un verrouillage approprié formant par exemple une articulation à genouillère 55 (figure 13).

Le changement d'état de la liaison par verrouillage-déverrouillage, est commandé par un organe actif bidirectionnel 56 à tige de commande reliée à l'articulation intermédiaire 54. Cette tige apporte la force de désalignement des articulations de la genouillère permettant la libération de la liaison. En effet, comme il est bien connu, l'alignement des articulations d'une liaison à genouillère correspond à son état bloqué.

L'ensemble de guidage 1 placé à l'avant et décrit ci-dessus est intégré dans un système plus général de guidage avec limitation du débattement latéral qui sera décrit maintenant.

L'ensemble de guidage 1 monté à l'avant dans le sens de marche peut être complété par un module situé obligatoirement à l'arrière. Cet ensemble arrière de limitation du débattement latéral, monté flottant sur le bloc d'essieu et assujetti au rail de guidage 16 est le module déjà référencé par 47. Il sera appelé ci-après module suiveur-limiteur (figures 2, 4, 11 et 12).

Ce module suiveur-limiteur 47 peut être formé selon l'invention des mêmes éléments déjà décrits ci-dessus. Ainsi, lorsqu'ils sont identiques, les mêmes références seront utilisées.

Il s'agit également de deux bras pivotants 2 et 3 par exemple de forme générale triangulaire dont la base 24,25 de chaque bras est articulée à pivotement autour d'un axe transversal 7 ou d'une série de tronçons d'axes 30 à 33 transversaux au véhicule. L'extrémité libre de chaque bras est équipée d'un galet incliné assujetti à suivre le ou les rails de guidage. Il peut s'agir du couple 19 de galets inclinés en V à pointe dirigée vers le bas en prise sur le rail 16 de guidage au sol, unique et central ou de deux galets indépendants 14 et 15 inclinés en V à pointe dirigée vers le haut en prise sur deux rails de guidage éloignés et indépendants 17 et 18 situés près des roues de l'essieu 8 et appartenant à la voie d'un véhicule ferroviaire urbain de transport en commun.

Les bras sont jumelés par un emboîtement mécanique transversal par exemple celui de la figure 6 et par une force transversale élastique de rapprochement (cas du couple central de galets) ou d'écartement (cas de deux galets distants et indépendants).

L'ensemble des deux bras 2 et 3 est contraint vers le bas par une charge verticale représentée par exemple par une force élastique ou hydraulique s'exerçant en appui par exemple simultané sur les deux bras par l'intermédiaire de la lame-ressort 41 à extrémité élargie 42 décrite précédemment pour l'ensemble de guidage 1.

Les deux bras 2 et 3 sont articulés à pivotement autour de l'axe 7 ou de la succession de tronçons d'axes 30 à 33 de direction générale transversale. Ces axes servent de guide pour le déplacement transversal des bras selon une course en arc de cercle correspondant à l'écart angulaire toléré pour la limitation du débattement latéral.

Pour ce faire, le tracé géométrique de la succession des tronçons d'axes du module suiveur-limiteur 47 est celui d'un arc de cercle CD centré sur le point milieu A du segment reliant les deux points de contact des galets avant.

Le même point milieu des galets arrière est référencé B.

Selon les particularités technologiques de construction, utilisées pour la variante représentée, les tronçons formant l'axe de pivotement 7 et disposés selon un arc de cercle CD de centre A et supportés par des pièces palières fixes 57,58 pour le bras 2 et 59,60 pour le bras 3, solidaires du bloc d'essieu 8 et disposées en éventail radialement par rapport au centre A. La liaison de pivotement est l'articulation formée de la succession en arc de cercle des tronçons d'axes rectilignes comme représenté sur la figure 11.

Les extrémités des tronçons d'axe sont portées par les chants transversaux des découpes en créneaux 34 à 36 que présentent les bases 24 et 25 des pièces triangulaires formant les bras de guidage 2 et 3.

Selon la réalisation préférée, la liaison entre les pièces palières fixes et les tronçons d'axe est à chaque fois une articulation déformable telle que 61 du type à faible résistance en direction axiale c'est-à-dire selon la direction générale du tronçon d'axe et à forte résistance radiale.

Un exemple de réalisation de ce type de liaison est illustré par les figures 14 à 16. Il s'agit de la succession d'articulations déformables identiques telles que 61 constituées chacune par exemple d'une structure élastique formée d'une juxtaposition de lamelles telles que 62 plates ou conformées en manchon en matière élastomère collées entre elles avec interposition d'un intercalaire.

Chaque articulation déformable 61 se déforme axialement de la façon illustrée par les figures 15 et 16 par une extension axiale à décalage, jusqu'à un déplacement maximal prédéterminé par construction.

La résistance importante à la déformation transversale de cette structure composite formée d'une succession alternée de lamelles élastiques et d'intercalaires selon la technique du caoutchouc lamifié provient de la structure lamellée de la liaison existant entre chaque pièce palière 57 à 60 et le tronçon d'axe adjacent. Inversement la déformation en cisaillement n'oppose qu'une faible résistance provenant également de ce type de structure.

On peut ainsi disposer d'une liaison à grande déformation transversale par rapport au véhicule et à faible déformation longitudinale particulièrement utile pour le travail des différents éléments composant le module suiveur-limiteur 47 comme on le verra ci-après.

L'ensemble formé par les deux bras 2 et 3 du module suiveur-limiteur 47 est monté flottant de la façon décrite ci-dessus par rapport à l'essieu 8 et ceci de part et d'autre de la position de ligne droite sur une faible plage de débattement angulaire défini par la course de chaque pièce palière jusqu'à sa position d'extension maximale.

Le module suiveur-limiteur 47 peut être complété par deux liaisons de maintien temporaire dans une position centrale de l'ensemble des deux bras. Ce moyen peut être matérialisé par deux dispositifs d'immobilisation latérale temporaire à changement d'état commandé. Cette liaison présente un moyen technique de verrouillage pour provoquer son blocage temporaire lors de son utilisation comme ensemble de guidage.

Ces dispositifs d'immobilisation latérale temporaire peuvent être réalisés sous différentes formes techniques notamment celle à genouillère décrite ci-dessus et représentée sur les figures.

Chaque liaison est, par exemple, constituée de deux biellettes articulées entre elles l'une à la suite de l'autre en un point d'articulation intermédiaire pour former un ensemble du type articulation à genouillère.

L'extrémité libre d'une des biellettes est articulée à un point fixe solidaire du bloc d'essieu. L'extrémité libre de l'autre biellette est articulée de préférence sur le flanc de la partie inférieure du côté de liaison de chaque bras.

La biellette côté bras présente une extrémité télescopique permettant une variation de longueur supplémentaire.

Cette liaison forme un triangle déformable dont les biellettes constituent les côtés, dont l'articulation à genouillère forme le sommet et dont l'intervalle entre les deux extrémités libres en est la base. Ce triangle se déforme automatiquement par variation de l'inclinaison des biellettes sous l'effet de la déviation angulaire du module suiveur-limiteur. Selon l'invention, cette déformation permet l'écart angulaire nécessaire en virage et en combinaison avec les articulations déformables un écart angulaire représentatif du débattement angulaire autorisé.

Lors d'un débattement latéral, les positions limites définissant la déviation angulaire maximale correspondent à la fin de course des tronçons d'axe de pivotement de part et d'autre de leur position centrale occupée en ligne droite.

Le module de limitation 47 peut être immobilisé en position centrale par le blocage résultant de l'alignement des biellettes. A cet effet, comme déjà décrit, l'articulation commune est reliée à une commande extérieure par une tige de commande actionnée en poussée ou en traction par un organe moteur bidirectionnel afin de provoquer le blocage ou la libération de la liaison.

L'état bloqué des deux genouillères rend le module limiteur-suiveur 47 équivalent à l'ensemble directionnel avant 1.

On peut ainsi constituer sur simple commande de changement d'état un ensemble directionnel aussi bien à l'arrière qu'à l'avant, c'est-à-dire transformer par une simple commande de verrouillage-déverrouillage l'ensemble directionnel avant 1 en un module limiteur-suiveur 47 et inversement.

Ceci permet sur commande d'utiliser le véhicule en sens de marche inverse.

Cette fonction peut exister également pour la variante représentée sur la figure 3.

La réversibilité totale est ainsi garantie.

Le système de guidage selon l'invention consiste en différentes variantes plus ou moins complexes.

On distingue d'abord la réalisation de base. Elle comporte uniquement un ensemble directionnel 1 à deux bras pivotants 2 et 3 telle que décrite en début (figure 1).

On distingue ensuite une autre réalisation sans limiteur de débattement latéral qui permet de fonctionner dans les deux sens de marche (figure 3).

On distingue encore ensuite la réalisation avec module suiveur-limiteur 47 de débattement latéral autorisant un débattement limité à l'arrière, réalisation qui présente un ensemble directionnel avant 1 quelconque mais conforme ou équivalent à la réalisation de base et un module suiveur-limiteur arrière 47 tel que décrit. L'ensemble directionnel avant 1 est monté fonctionnellement rigide en direction avec l'essieu (figures 2 ou 4).

On distingue plus particulièrement la réalisation réversible avec suiveur-limiteur 47 c'est-à-dire la réalisation présentant un ensemble directionnel 1 à l'avant et un module suiveur-limiteur 47 à l'arrière tous deux identiques (figure 4). Dans ce mode de réalisation, l'ensemble directionnel 1 est rendu fonctionnellement rigide en direction avec l'essieu 8 par l'intermédiaire des dispositifs d'immobilisation temporaire commandée 43,44 à verrouillage-déverrouillage (figures 10 et 11).

Il existe une catégorie supplémentaire de formes de réalisation qui consiste à rajouter à chaque variante la fonction d'extraction des galets du ou des rails de guidage. Cette forme de réalisation impose un ensemble directionnel 1 relevable ou un ensemble directionnel 1 et un module suiveur-limiteur 47 tous les deux relevables.

Pour relever l'un des ensembles, il suffirait de libérer les dispositifs d'immobilisation temporaire commandée 43, 44 et de basculer vers le haut l'ensemble de guidage 1 et/ou le module suiveur-limiteur 47 sous l'effet d'un moyen moteur.

L'ensemble directionnel 1 seul fonctionne de façon classique puisqu'il est réalisé fonctionnellement rigide en orientation avec l'essieu 8. Il gouverne donc directement l'essieu. Ses variations angulaires consécutives aux courbes du tracé à suivre matérialisées par les courbures du ou des rails de guidage provoque une orientation correspondante de l'essieu 8.

Selon une réalisation particulière représentée sur les figures 11 et 12, le système de guidage avec limitation du débattement latéral est monté sur le module intermédiaire 11 autoporté par un essieu 8 placé entre deux voitures successives d'une rame routière de transport en commun.

On remarque sur ces figures deux ensembles identiques l'un 1 à l'avant servant d'ensemble de guidage et l'autre 47 à l'arrière servant de module suiveur-limiteur ainsi que les bases 24,25 des bras triangulaires 2 et 3 découpées en créneaux 34 à 37 et les tronçons d'axe 30 à 33 traversant les pièces palières 57 à 60.

L'ensemble avant 1 est immobilisé en direction par rapport à l'essieu 8 par deux dispositifs d'immobilisation temporaire commandée 43, 44 qui ont été bloqués sous l'action du moyen bidirectionnel 56 de commande d'état. Cet état bloqué se caractérise par l'alignement des articulations des biellettes formant les genouillères.

Cette liaison reste à l'état bloqué jusqu'à ce qu'une action du moyen bidirectionnel 56 de commande d'état sous la forme d'une force latérale provoque le désalignement au niveau de l'articulation intermédiaire 54 de la genouillère.

L'ensemble arrière est identique, mais sert de module suiveur-limiteur 47. Pour ce faire, les dispositifs d'immobilisation temporaires 43,44 sont débloqués, c'est-à-dire que les articulations de la genouillère 55 sont désalignées et laissées flottantes par le moyen bidirectionnel 56 de commande de changement d'état de la liaison à genouillère. Cette liaison variera en longueur et s'adaptera à la longueur nécessaire entre le point fixe 45,46 et la jonction articulée existant sur le flanc du bras adjacent pour les diverses inclinaisons angulaires de l'ensemble des bras dans le plan de ceux-ci.

D'autres particularités du module intermédiaire 11 autoporté proviennent de son essieu 63 en U, de ses suspensions supérieures 64,65 et de ses deux centres de pivotement 66,67 entre les voitures ainsi que de son ossature fermée 68. Elles entrent dans le cas d'application propre au transport en commun routier par rame composée de plusieurs voitures reliées entre elles à travers un module intermédiaire.

On expliquera maintenant le fonctionnement de la variante avec limiteur de débattement latéral. On rappelle que selon cette variante, l'ensemble directionnel avant 1 est immobilisé en cap par rapport à l'essieu par tout moyen convenable, en particulier par les moyens décrits qui sont des dispositifs à immobilisation temporaire 43,44.

Le limiteur de débattement latéral joue son rôle en cas de perte momentanée d'adhérence ou de ripage, ou d'une difficulté de roulage liée aux roues, de vent latéral ou toute autre cause de débattement latéral.

Un exemple type est représenté sur les figures schématiques de 16 à 19.

Lors de la survenue d'une perte d'adhérence des pneus, l'essieu s'éloigne de sa position correcte, ce déplacement représente un débattement latéral.

Selon l'invention, on cherche à limiter ce débattement latéral à une valeur maximale.

Le travail des différents organes est le suivant.

Les dispositifs d'immobilisation latérale temporaire commandée 43,44 situés à l'arrière c'est-à-dire du côté du module limiteur 47 sont relâchés. Les biellettes 52,53 ainsi rendues libres en mouvement permettent au module suiveur-limiteur 47 de varier légèrement en direction en raison de son montage flottant par lequel il est relié au bloc d'essieu 8.

Un déport latéral de l'essieu provoquera un débattement latéral et en conséquence un déplacement des pièces palières 57 à 60 sur les tronçons d'axe à travers les articulations déformables 61.

L'amplitude du mouvement de débattement latéral provoqué par la perturbation peut être inférieure à la course angulaire correspondante et n'engendrer qu'une déformation limitée de l'articulation déformable 61. Dans ce cas, le seuil n'est pas atteint. Il peut s'agir d'un débattement normal de prise de virage ou d'un déport latéral de faible amplitude.

Les vues schématiques des figures 16 à 19 ont pour but d'illustrer de façon simple la limitation du débattement latéral en ligne droite et en virage lors d'une situation de glissade ou de dérapage.

Les lignes en traits pleins représentent la trajectoire normale des roues de l'essieu, celles en traits interrompus représentent la trajectoire de dérive c'est-à-dire celle avec débattement latéral de l'essieu dans le cas d'un désaxement (sans et ensuite) avec inclinaison de l'essieu. La ligne centrale représente le rail de guidage. Elle indique la direction à suivre. Les lignes ou courbes adjacentes montrent les trajectoires de dérive du milieu d'essieu en ligne droite et en virage. A et B désignent les points situés au milieu du segment entre les points de contact des galets respectivement avant et arrière et CD l'arc de cercle de centre A.

Privés de leur adhérence les pneus glissent ou ripent et l'essieu se retrouve dans une position désaxée. Pour le déport latéral sur ligne droite on a choisi de représenter une trajectoire en biais. Pour le déport latéral en virage, la trajectoire est légèrement excentrée.

De l'observation des figures 17 et 18 on remarque qu'à la légère inclinaison de l'essieu traduisant le débattement maximal autorisé par le système correspond une position d'écart angulaire maximal des bras arrière du module suiveur-limiteur sur l'arc de cercle CD de centre A matérialisé à l'arrière de l'essieu.

Les courses de part et d'autre sur cet arc CD c'est-à-dire l'intervalle d'arc entre la position de ligne droite et la position limite de débattement sont représentées à chaque fois par un segment en trait fort.

Ce débattement limite provient de l'extension maximale de l'articulation déformable par rapport à sa position médiane de ligne droite.

A l'observation des figures 19 et 20, le même phénomène de désalignement des axes des bras avant et arrière se produit. Le module suiveur-limiteur 47 de débattement latéral de l'essieu a pour effet de limiter ce désaxement en l'arrêtant au-delà d'une certaine valeur de seuil.

## Revendications

1. Système de guidage pour un essieu (8) d'un véhicule routier mettant en oeuvre un ensemble de guidage portant deux galets inclinés se déplaçant le long d'au moins un rail de guidage au sol, **caractérisé en ce que** l'ensemble de guidage au sol est un ensemble directionnel (1) formé de deux bras (2) et (3) pivotants autour d'un axe (7) transversal au véhicule, soumis à une charge verticale et à une contrainte de jumelage, les bras (2) et (3) portant chacun un galet de guidage incliné (12,13) ou (14, 15) en prise de roulage sur une piste de guidage d'au moins un rail de guidage au sol et **en ce qu'**il est relié de façon fonctionnellement rigide en orientation à l'essieu (8).

2. Système de guidage selon la revendication 1 **caractérisé en ce que** la contrainte de jumelage se décompose en une force élastique transversale et en un agencement mécanique dissociable assurant la solidarisation transversale temporaire des deux bras.

3. Système de guidage selon la revendication 1 ou 2 **caractérisé en ce que** les galets inclinés de guidage (12,13) sont proches, inclinés en V à pointe dirigée vers le bas formant un couple (19) et **en ce que** le rail de guidage est un rail central (16).

4. Système de guidage selon la revendication 1 ou 2 **caractérisé en ce que** les galets inclinés de guidage (14,15) sont distants l'un de l'autre, inclinés en V à pointe dirigée vers le haut et **en ce que** le rail de guidage est constitué d'un ensemble de deux rails de guidage (17,18) distants l'un de l'autre.

5. Système de guidage selon l'une quelconque des revendications précédentes **caractérisé en ce que** l'ensemble de guidage (1) est relié en outre à l'essieu (8) par deux dispositifs d'immobilisation.

6. Système de guidage selon la revendication précédente **caractérisé en ce que** les dispositifs d'immobilisation sont à immobilisation temporaire.

7. Système de guidage selon la revendication précédente **caractérisé en ce que** l'immobilisation temporaire passe sur commande d'un état dans un autre.

8. Système de guidage selon l'une quelconque des revendications précédentes **caractérisé en ce qu'**il comporte un ensemble directionnel à l'avant et un ensemble identique à l'arrière.

9. Système de guidage selon l'une quelconque des revendications précédentes de 7 à 8 **caractérisé en ce que** les dispositifs d'immobilisation de l'ensemble directionnel avant sont verrouillés et **en ce que** ceux de l'ensemble arrière sont déverrouillés.

10. Système de guidage selon l'une quelconque des revendications précédentes **caractérisé en ce que** l'ensemble de guidage est doublé à l'arrière par un module suiveur (47) en prise de roulage par ses galets sur au moins un rail de guidage.

11. Système de guidage selon l'une quelconque des revendications précédentes **caractérisé en ce que** l'ensemble de guidage est doublé à l'arrière par un module (47) limiteur-suiveur de débattement latéral assujetti au rail de guidage, module monté pivotant sur l'essieu (8) et déplaçable latéralement de façon limitée par des articulations déformables (61) sur un tracé en arc de cercle CD centré sur le point milieu A des deux points de contact des galets inclinés de l'ensemble de guidage.

12. Système de guidage selon la revendication 1, **caractérisé en ce que** l'ensemble de guidage est doublé à l'arrière par un ensemble identique mobile latéralement par déplacement latéral le long de l'axe de pivotement et dont les dispositifs d'immobilisation temporaire sont libérés pour jouer le rôle d'un module suiveur-limiteur de débattement latéral.

13. Système de guidage selon la revendication 11 ou 12, **caractérisé en ce que** les bras (2) et (3) sont articulés à pivotement sur l'essieu (8) par l'intermédiaire d'une succession de tronçons d'axes disposés selon un arc de cercle CD centré sur le point milieu A des points de contact des deux galets avant.

14. Système de guidage selon l'une quelconque des revendications 5 à 9, **caractérisé en ce que** les dispositifs d'immobilisation temporaire sont des articulations à genouillère (55) formées chacune de deux biellettes articulées entre elles par une articulation centrale et articulée en extrémité pour l'une à un point fixe (45,46) par rapport à l'essieu et pour l'autre à l'un des bras de guidage (2) ou (3), l'articulation centrale étant déplacée transversalement par une tige de commande actionnée par un organe moteur bidirectionnel (56).

15. Système de guidage selon la revendication précédente **caractérisé en ce que** l'extrémité de la biellette située côté bras de guidage est télescopique.

16. Système de guidage selon l'une quelconque des revendications 11 à 13, **caractérisé en ce que** les articulations déformables sont formées de pièces palières portant chacune un tronçon d'axe à travers une liaison élastique déformable.

17. Système de guidage selon l'une quelconque des revendications précédentes, **caractérisé en ce que** l'ensemble de guidage (1) est extractible du rail de guidage.

## Patentansprüche

1. Führungssystem für eine Achse (8) eines Straßenfahrzeugs mit einer Führungsanordnung, die zwei geneigte Rollen trägt, die sich entlang mindestens einer Boden-Führungsschiene bewegen, **dadurch gekennzeichnet, daß** die Boden-Führungsanordnung eine richtungsabhängige Anordnung (1) darstellt, die aus zwei Armen (2, 3) gebildet ist, die um eine Querachse zum Fahrzeug schwenken, die einer vertikalen Last und einer Zwangskopplung unterworfen sind, wobei jeder der Arme (2, 3) eine geneigte Führungsrolle (12, 13 oder 14, 15) trägt, die in Rollverbindung mit der Führungsfläche mindestens einer Boden-Führungsschiene steht, und daß es hinsichtlich der Orientierung funktionell starr mit der Achse (8) verbunden ist.

2. Führungssystem gemäß Anspruch 1, **dadurch gekennzeichnet, daß** sich die Zwangskopplung in eine transversale elastische Kraft und eine trennbare mechanische Anordnung zum Gewährleisten der zeitlich begrenzten transversalen Verbindung der beiden Arme aufgliedert.

3. Führungssystem gemäß Anspruch 1 oder 2, **dadurch gekennzeichnet, daß** die geneigten Führungsrollen (12, 13) nahe beieinander angeordnet sind, wobei sich eine V-förmige paarweise Anordnung (19) mit nach unten gerichteter Spitze ergibt, und daß die Führungsschiene eine Zentralschiene (16) ist.

4. Führungssystem gemäß Anspruch 1 oder 2, **dadurch gekennzeichnet, daß** die geneigten Führungsrollen (14, 15) voneinander beabstandet angeordnet sind, wobei sich eine V-förmige Anordnung mit nach oben gerichteter Spitze ergibt, und daß die Führungsschiene aus einer Anordnung von zwei Führungsschienen (17, 18) gebildet ist, die voneinander beabstandet angeordnet sind.

5. Führungssystem nach einem der vorangehenden Ansprüche, **dadurch gekennzeichnet, daß** die Führungsanordnung (1) unter anderem mittels zweier Immobilisierungs-Vorrichtungen mit der Achse (8) verbunden ist.

6. Führungssystem nach dem vorangehenden Anspruch, **dadurch gekennzeichnet, daß** die Immobilisierungs-Vorrichtungen eine zeitlich begrenzte Immobilisierung bewirken.

7. Führungssystem nach dem vorangehenden Anspruch, **dadurch gekennzeichnet, daß** die zeitlich begrenzte Immobilisierung gesteuert von einem Zustand in einen anderen übergeht.

8. Führungssystem nach einem der vorangehenden Ansprüche, **dadurch gekennzeichnet, daß** es eine vordere richtungsabhängige Anordnung und eine identische hintere Anordnung aufweist.

9. Führungssystem nach Anspruch 7 oder 8, **dadurch gekennzeichnet, daß** die Immobilisierungs-Vorrichtungen der vorderen richtungsabhängigen Anordnung verriegelt und die der hinteren Anordnung entriegelt sind.

10. Führungssystem nach einem der vorangehenden Ansprüche, **dadurch gekennzeichnet, daß** die Führungsanordnung im hinteren Teil durch eine Nachlauf-Baugruppe (47) verdoppelt ist, die mittels ihrer Rollen in Rollverbindung mit mindestens einer Führungsschiene steht.

11. Führungssystem nach einem der vorangehenden Ansprüche, **dadurch gekennzeichnet, daß** die Führungsanordnung im hinteren Teil durch eine Nachlauf-Baugruppe (47) zum Begrenzen seitlicher Versatzbewegungen durch die Führungsschieneverdoppelt ist, wobei die Baugruppe auf der Achse (8) schwenkbar und in durch verformbare Gelenke (61) begrenztem Maße seitlich längs eines Kreisbogens CD beweglich angeordnet ist, dessen Mittelpunkt A mittig zwischen den beiden Kontaktstellen der geneigten Rollen der Führungsanordnung liegt.

12. Führungssystem nach Anspruch 1, **dadurch gekennzeichnet, daß** die Führungsanordnung im hinteren Teil durch eine identische Anordnung verdoppelt ist, die in seitlicher Richtung durch seitliches Verlagern entlang der Schwenkachse beweglich ist und deren Vorrichtungen zur zeitlich begrenzten Immobilisierung entriegelt sind, wodurch die Anordnung als Nachlauf-Baugruppe zum Begrenzen seitlicher Versatzbewegungen wirkt.

13. Führungssystem nach Anspruch 11 oder 12, **dadurch gekennzeichnet, daß** die Arme (2, 3) mittels einer Aufeinanderfolge von Achsteilstücken, die auf einem Kreisbogen CD angeordnet sind, dessen Mittelpunkt A mittig zwischen den Kontaktstellen der beiden vorderen Rollen liegt, schwenkbar an der Achse (8) angelenkt sind.

14. Führungssystem nach einem der Ansprüche 5 bis 9, **dadurch gekennzeichnet, daß** die Vorrichtungen zur zeitlich begrenzten Immobilisierung als Kniehebel (55) ausgebildet sind, die jeweils aus zwei über ein Zentralgelenk miteinander verbundenen Lenkern gebildet sind, von denen der eine endseitig an einer bezüglich der Achse festliegenden Stelle (45, 46) und der andere endseitig an einem der Führungsarme (2, 3) angelenkt ist, wobei das Zentralgelenk mittels einer Steuerstange quer verlagerbar ist, die durch ein Zweirichtungs-Antriebselement (56) betätigbar ist.

15. Führungssystem nach dem vorangehenden Anspruch, **dadurch gekennzeichnet, daß** das Ende des Lenkers, das dem Führungsarm benachbart ist, teleskopisch ausgebildet ist.

16. Führungssystem nach einem der Ansprüche 11 bis 13, **dadurch gekennzeichnet, daß** die verformbaren Gelenke aus Lagerelementen gebildet sind, von denen jedes ein eine elastisch deformierbare Verbindung querendes Achsteilstück trägt.

17. Führungssystem nach einem der vorangehenden Ansprüche, **dadurch gekennzeichnet, daß** die Führungsanordnung (1) von der Führungsschiene abziehbar ist.

## Claims

1. A guide system for an axle (8) of a road vehicle using a guide assembly with two inclined wheels displaced along at least a guide rail on the ground, **characterized in that** the ground guide assembly is a directional unit (1) formed of two arms (2) and (3) pivoting about an axis (7) transverse to the vehicle, subjected to a vertical force and a coupling restraint, said arms (2) and (3) each supporting an inclined guide wheel (12, 13 or 14, 15) engaged in rolling movement along a guide path in at least one ground guide rail, and **in that** it is connected so as to be functionally rigid in orientation with the axle (8).

2. A guide system according to claim 1, **characterized in that** the coupling restraint is composed of a transverse elastic force and a disconnectable mechanical arrangement which provide a temporary transverse connection for the two arms.

3. A guide system according to claim 1, **characterized in that** the inclined guide wheels (12, 13) are close together and inclined in a downward pointing V forming a coupling (19), and **in that** the guide rail consists of one central rail (16).

4. A guide system according to claim 1, **characterized in that** the inclined guide wheels (14, 15) are spaced apart from each other and inclined in an upward pointing V, and that the guide rail consists of a unit of two guide rails (17, 18) separated from each other.

5. A guide system according to claim 1, **characterized in that** the guide assembly (1) is further connected to the axle (8) by two immobilization means.

6. A guide system according to claim 1, **characterized in that** the immobilization devices are used for temporary immobilization.

7. A guide system according to claim 1, **characterized in that** the temporary immobilization system can be controlled to switch from one state to another.

8. A guide system according to claim 1, **characterized in that** there is one directional unit at the front and an identical unit at the rear.

9. A guide system according to claim 7, **characterized in that** the immobilization means on the front directional unit are locked and those on the rear unit are unlocked.

10. A guide system according to claim 1, **characterized in that** the guide system is duplicated in the rear by a follower module (47) engaged in movement along at least one guide rail by its wheels.

11. A guide system according to claim 1, **characterized in that** the guide system is duplicated in the rear by a lateral clearance follower-limiter module (47) subjected to the guide rail, which module is pivotably attached to the axle (8) and which is laterally displaceable to the extent allowed by deformable articulations (61) along an arc CD centered on the mid-point A of the two contact points of the inclined wheels of the guide assembly.

12. A guide system according to claim 1, **characterized in that** the guide assembly is duplicated in the rear by an identical assembly which is laterally movable by lateral displacement along the pivot axle, and whose temporary immobilization means are released to serve as a lateral clearance follower-limiter module.

13. A guide system according to claim 11, **characterized in that** the arms (2) and (3) are pivotably articulated to the axle (8) using a successsion of axle elements arranged in an arc CD centered on the mid-point A of the contact points of the two front guide wheels.

14. A guide system according to claim 5, **characterized in that** the temporary immobilization means consists of ball and socket articulations (55), each formed of two articulated rods joined by a central articulation and which are respectively articulated at the end to a point (45, 46) which is fixed in relation to the axle, and to one of the guide arms (2) or (3), said central articulation being transversely displaced by a control shaft actuated by a bidirectional motor (56).

15. A guide system according to claim 1, **characterized in that** the end of the rod located near the guide arm is telescoping.

16. A guide system according to claim 11, **characterized in that** the deformable articulations are formed of bearing elements, each supporting an axle element through a deformable flexible connector.

17. A guide system according to claim 1, **characterized in that** the guide system (1) can be extracted from the guide rail.
